# EUROPEAN PATENT APPLICATION

(11) **EP 4 773 230 A1**
(43) Date of publication of application: **08.07.2026**
(21) Application number: 24944462.1
(22) Date of filing: 24.12.2024
(51) Int. Cl.: H01M 4/36, H01M 4/62, H01M 4/58, H01M 10/0525, C01B 25/45

(54) **PHOSPHATE-BASED POSITIVE ELECTRODE MATERIAL, AND PREPARATION METHOD THEREFOR AND USE THEREOF**

(30) Priority: 28.06.2024 CN 202410867967
(71) Applicant: Eve Power Co., Ltd., Jingmen, Hubei 448000 (CN)
(72) Inventor: SHI, Zhongyang, Jingmen, Hubei 448000 (CN); LIU, Gang, Jingmen, Hubei 448000 (CN); LIU, Fanfen, Jingmen, Hubei 448000 (CN)
(74) Representative: Mewburn Ellis LLP
(86) International application number: PCT/CN2024/141864
(87) International publication number: WO 2026/000898

(57) **Abstract**

A phosphate-based cathode material, a preparation method therefor, and a use thereof are provided in the disclosure. The phosphate-based cathode material includes a matrix particle and a carbon coating layer coated on a surface of the matrix particle. A chemical formula of the matrix particle is LiₓM_{y}PO₄, where 0.96 ≤ x ≤ 1.08, 0.96 ≤ y ≤ 1, and M includes at least one of Fe or Mn. A first metal element is doped on an M site, and the first metal element includes at least one of Ti, V, Cr, Co, Ni, Nb, Mo, or W; and/or, a second metal element is doped on a Li site, and the second metal element includes at least one of Mg or Zr. The carbon coating layer includes a carbon material, and a degree of disorder I_{D}/I_{G} of the carbon material is less than or equal to 1.2.

## Description

This application claims priority to Chinese Patent Application No. 2024108679673, filed June 28, 2024, and the entire disclosure of which is incorporated herein by reference.

### TECHNICAL FIELD

The disclosure relates to the field of lithium battery technology, and in particular, to a phosphate-based cathode material, a preparation method therefor, and a use thereof.

### BACKGROUND

Lithium-ion batteries have advantages such as high energy density, small self-discharge, long cycle life, safety, and environmental friendliness, and are thus widely used in consumer electronics, electric vehicles, power and communication energy storage, and other fields. According to the difference between cathode materials, lithium-ion batteries can be classified into lithium cobalt oxide batteries, lithium manganese oxide batteries, ternary lithium batteries, lithium iron phosphate batteries, etc., corresponding to cathode materials such as lithium cobalt oxide (LCO), lithium manganese oxide (LMO), ternary lithium nickel manganese cobalt oxide (NMC), and ternary lithium nickel cobalt aluminum oxide (NCA). The preparation costs of the LCO, ternary NMC, and ternary NCA are relatively high, which to a certain extent limit the scope of application. Although the price of spinel LMO is relatively low, its energy density and cycle life are relatively low, which is not conducive to the application of LMO in high-end products.

In order to reduce the application cost of lithium batteries and enable lithium batteries to maintain good application performance, research on phosphate-based active materials that do not contain precious metal elements (e.g., nickel, cobalt, manganese) has gradually received attention. Currently, commonly used phosphate-based active materials mainly include lithium iron phosphate (LFP), lithium manganese phosphate (LMP), lithium manganese iron phosphate (LMFP), etc.

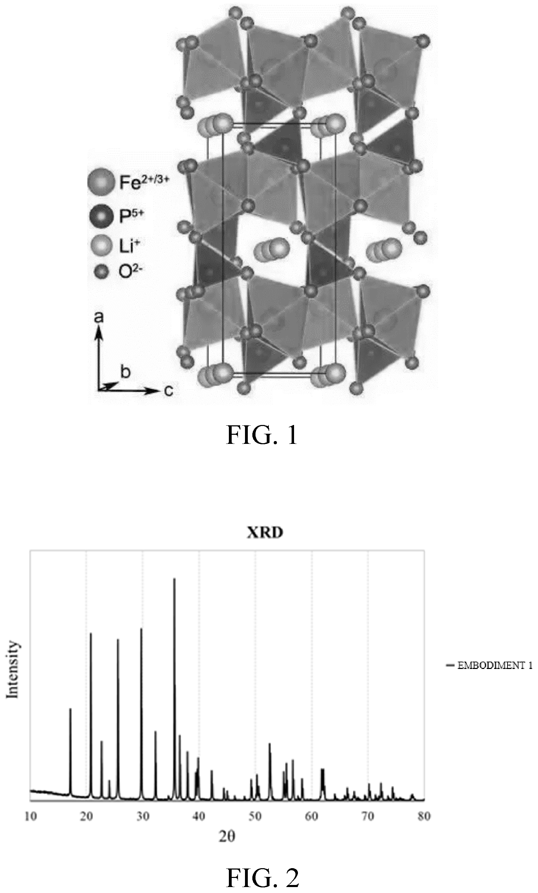

Due to advantages such as stable structure, abundant reserves of main elements Fe and P, low price, ultra-long cycle life, and high safety, LFP is widely used in passenger vehicle power batteries, commercial vehicle power batteries, and power communication energy-storage batteries, etc. However, limited by the olivine structure (as illustrated in FIG. 1), LFP has low conductivity, poor ion diffusion performance, poor rate performance, and poor low-temperature performance.

The crystal structure of LMP is basically the same as the crystal structure of LFP, and there is obvious polarization phenomenon in LMP during charging. When applied to lithium batteries, LMP will significantly reduce the capacity and power density of lithium batteries.

As a mixed product of LFP and LMP, LMFP has a crystal structure basically the same as that of LFP. LMFP has the same advantages as LFP and has a higher discharge voltage relative to LFP, resulting in higher energy density at similar discharge capacities. However, the constant voltage charge ratio of LMFP is relatively large. Therefore, LMFP is not suitable for energy-storage batteries, and a battery using LMFP has a short cycle life and has difficulty in fully utilizing the capacity.

### TECHNICAL PROBLEM

Fe and Mn will be dissolved out in lithium batteries using the above several phosphate-based active materials. The iron ions and/or manganese ions dissolved out will migrate to an anode, forming a heterogeneous catalytic active center, catalyzing the decomposition of an electrolyte and a solid electrolyte interface (SEI) film of the anode. Therefore, the self-discharge rate, cycle performance, and storage performance of lithium-ion batteries will be affected, which is not conducive to the improvement of ion conductivity and rate performance of the lithium batteries.

### TECHNICAL SOLUTIONS

In a first aspect, a phosphate-based cathode material is provided in the disclosure. The technical solution is as follows. The phosphate-based cathode material includes a matrix particle and a carbon coating layer coated on a surface of the matrix particle. A chemical formula of the matrix particle is LiₓM_{y}PO₄, where 0.96 ≤ x ≤ 1.08, 0.96 ≤ y ≤ 1, and M includes at least one of Fe or Mn. A first metal element is doped on an M site, and the first metal element includes at least one of Ti, V, Cr, Co, Ni, Nb, Mo, or W; and/or, a second metal element is doped on a Li site, and the second metal element includes at least one of Mg or Zr. The carbon coating layer comprises a carbon material, and a degree of disorder I_{D}/I_{G} of the carbon material is less than or equal to 1.2.

In the Raman spectrum of carbon material, there are two typical scattering peaks. One is the D peak at around 1350cm⁻¹, and the other is the G peak at around 1580cm⁻¹. I_{D} represents the peak intensity of the D peak at 1300cm⁻¹ to 1400cm⁻¹ in the Raman spectrum, and I_{G} represents the peak intensity of the G peak at 1530cm⁻¹ to 16300cm⁻¹ in the Raman spectrum.

In a second aspect, a method for preparing a phosphate-based cathode material is provided in the disclosure. The technical solution is as follows. The method for preparing a phosphate-based cathode material includes the following operations. At S1, mixing an iron source, a manganese source, a lithium source, and a carbon source, adding water, and grinding to obtain a pre-mixed slurry. At S2, spray-drying, sintering, and pulverizing the pre-mixed slurry to obtain the phosphate-based cathode material.

In a third aspect, a lithium-ion battery is provided in the disclosure. The lithium-ion battery includes a cathode. The cathode includes an active material layer, and the active material layer includes the above phosphate-based cathode material.

### BENEFICIAL EFFECTS

First, on one hand, high-valent metal elements being doped on the M site not only creates local lithium vacancies, improving the lithium diffusion coefficient, but also forms vacancy defects in the material lattice and results in a narrower band gap in the total density of states (TDOS). In this way, the ionic conductivity of the cathode material is improved and the rate performance and low-temperature performance are enhanced. On the other hand, Mg and Zr elements being doped at the Li site not only creates local lithium vacancies, improving the lithium diffusion coefficient, but also expands the lithium layer channels, reducing the intercalation and deintercalation resistance of lithium ions, thereby improving the rate performance and ionic conductivity of the cathode material.

Second, since I_{D} and I_{G} respectively correspond to the sp³ hybridization and sp² hybridization of carbon, a smaller peak intensity ratio (I_{D}/I_{G}) indicates a lower degree of disorder and a higher graphitization degree of the carbon material. By using a carbon material with a low degree of disorder and a high graphitization degree to coat the matrix particle, the electrochemical activity of the cathode material can be significantly improved. The coating layer with a higher graphitization degree can effectively reduce the interfacial impedance of the material, thereby significantly reducing the charge transfer impedance of the material, which helps to further improve the rate performance and low-temperature performance of the cathode material.

Third, defects in the carbon coating layer will to a certain extent promote side reactions of the phosphate-based cathode material in the electrolyte. The doping of the first metal element and the second metal element can inhibit the above promoting effect and also helps to reduce the degradation degree of the material in the carbon coating layer caused by side reactions, preventing an increase in the degree of disorder of the carbon coating layer in the cycling process of lithium battery and improving the stability of the carbon coating layer. Moreover, a stable carbon coating layer can stabilize the coated matrix particle and reduce Mn and Fe dissolved out from the matrix particle, thereby reducing the deposition amount of Fe/Mn ions dissolved out from the cathode and migrating and depositing on the anode through electromigration. In this way, the catalytic decomposition of the electrolyte and the catalytic decomposition of the negative electrode SEI film are reduced, thereby improving the self-discharge rate and cycle performance of the lithium battery.

Fourth, with the doping of high-valent metal elements and the presence of the carbon coating layer, Fe/Mn dissolved out in the cathode material can be significantly reduced, which significantly avoids the negative impact of Fe/Mn ions that are dissolved out on the electrolyte and the solid electrolyte interface (SEI) film of the anode, thereby improving the self-discharge rate, cycle performance, and storage performance of the lithium-ion battery.

### BRIEF DESCRIPTION OF THE DRAWINGS

FIG. 1 is a schematic diagram of a crystal structure of a phosphate-based cathode material.
FIG. 2 is an X-ray diffraction (XRD) diagram of the phosphate-based cathode material prepared in embodiment 1 of the disclosure.
FIG. 3 illustrates a scanning electron microscopy (SEM) image (a) of the phosphate-based cathode material prepared in embodiment 1 of the disclosure and an SEM image (b) of the phosphate-based cathode material prepared in embodiment 4 of the disclosure.
FIG. 4 illustrates a charge-discharge curve testing graph (a) of a lithium iron phosphate (LFP) lithium battery in embodiment 1 of the disclosure and a charge-discharge curve testing graph (b) of a lithium manganese iron phosphate (LMFP) lithium battery in embodiment 4 of the disclosure.

### IMPLEMENTATIONS OF THE DISCLOSURE

Unless otherwise illustrated, all numerical values used in the specification and claims to express amounts of ingredients, reaction conditions, etc. are interpreted to be modified by the term "about". Accordingly, unless indicated to the contrary, the numerical parameters set forth herein are approximates that can vary depending upon the desired properties sought to be obtained.

As used herein, "and/or" refers to one or all of the referred elements.

As used herein, "comprise" and "include" encompass only the recited element as well as instances where there are other unrecited elements in addition to the recited element.

All percentages in the disclosure are weight percentages unless otherwise illustrated.

Unless otherwise illustrated, "a", "a kind", "an", and "the" used in this specification are intended to include "at least one" or "one or more". For example, "a component" refers to one or more components, thus more than one component may be contemplated and may be adopted or used in the implementation of the described embodiments.

In some embodiments, the content of carbon in a phosphate-based cathode material is in a range of 1wt% to 2wt%.

By controlling the content of carbon in the phosphate-based cathode material, the content of graphitized carbon in the phosphate-based cathode material is increased, thereby significantly improving the electrochemical performance of the phosphate-based cathode material. When the mass percentage content of a carbon coating layer is too low, an effective conductive network structure cannot be constructed in a cathode active material layer formed by the phosphate-based cathode active material, causing excessive battery impedance and polarization, leading to battery performance degradation. When the mass percentage content of the carbon coating layer is too high, defects in the carbon material will act as active sites to intensify the degree of side reactions of a cathode in an electrolyte, and the side reaction products will block the lithium ion transport channels of the carbon coating layer, or even damage the degree of order of the carbon coating layer, thereby causing a significant increase in battery impedance and consuming active lithium, leading to rapid capacity fading of a lithium battery.

In some embodiments, the content of doped first metal element is less than or equal to 5000ppm.

In some embodiments, the content of doped second metal element is less than or equal to 3000ppm.

By controlling the content of the doped first metal element and the doped second metal element, the generation of impurity phases can be avoided, preventing a reduction in the initial capacity of the material caused by residual lithium on the surface of the cathode.

In some embodiments, the particle size D50 of the phosphate-based cathode material is in a range of 50nm to 2000nm.

In some embodiments, the particle size D50 of the phosphate-based cathode material refers to the particle size *D50* of primary particles of the phosphate-based cathode material observed during a scanning electron microscopy (SEM) testing.

In some embodiments, the compacted density of the phosphate-based cathode material is in a range of 2g/cm³ to 2.7g/cm³.

By controlling a reasonable grain composition of the phosphate-based cathode material, the phosphate-based cathode material can achieve a relatively wide range of compacted density to improve the applicability range of the cathode material of the disclosure.

In some embodiments, an iron source includes at least one of FePO₄, Fe₂O₃, or FeC₂O₄. A manganese source includes at least one of MnPO₄, MnCO₃, or Mn₃O₄. A lithium source includes at least one of Li₂CO₃, LiOH·H₂O, LiCl, Li₂SO₄, Li₂HPO₄, LiH₂PO₄, Li₃PO₄, or LiNO₃.

A doped source includes an M-site doped source and a Li-site doped source. The M-site doped source includes at least one of Ti salts, oxides of Ti salts, V salts, oxides of V salts, Cr salts, oxides of Cr salts, Co salts, oxides of Co salts, Ni salts, oxides of Ni salts, Nb salts, oxides of Nb salts, Mo salts, oxides of Mo salts, W salts, or oxides of W salts. The Li-site doped source includes at least one of Mg salts, oxides of Mg salts, Zr salts, or oxides of Zr salts.

The carbon source includes a polymeric carbon source and a small molecular carbon source. The polymeric carbon source includes at least one of polyethylene glycol, polyvinylpyrrolidone, graphene, or carbon nanotubes; and the small molecular carbon source comprises at least one of glucose, sucrose, or conductive carbon black.

In some embodiments, the mass proportion of the polymeric carbon source in the carbon source is less than 50%.

The polymeric carbon source and the small molecular carbon source are combined to form a composite carbon source. Since the C-C bonds in the small molecular carbon source exhibit disorder while the C-C bonds in the polymeric carbon source exhibit order, the small molecular carbon source is more likely to form sp³ hybridized carbon while the polymeric carbon source is more likely to form sp² hybridized carbon under the high-temperature during sintering for preparing the cathode material. By adjusting the ratio of the polymeric carbon source to the small molecular carbon source, the content of the sp² hybridized carbon is increased, thereby regulating the I_{D}/I_{G} ratio in a suitable range.

In some embodiments, at S1, a phosphorus source is included. The phosphorus source includes at least one of Li₂HPO₄, LiH₂PO₄, Li₃PO₄, (NH₄)₂HPO₄, NH₄H₂PO₄, or H₃PO₄.

In some embodiments, at S1, the solid content of a pre-mixed slurry is in a range of 20wt% to 60wt%.

At S2, sand milling is performed to grind a ground slurry, the particle size of grinding beads is in a range of 0.2mm to 0.5mm, and a duration of the sand milling is in a range of 8h to 20h. A temperature for spray drying is less than or equal to 300°C. A temperature for sintering is in a range of 650°C to 850°C, a duration of sintering is in a range of 5h to 20h, and a heating rate during sintering is in a range of 2°C/min to 15°C/min.

In some embodiments, the solid content of the pre-mixed slurry is in a range of 35wt% to 50wt%.

In some embodiments, an organic molecular liquid is added to the sintering environment during sintering. The organic molecular liquid includes at least one of ethanol, methanol, or acetone. The rate at which the organic molecular liquid is pumped into the sintering environment is in a range of 1mL/min to 100mL/min.

The heating rate during sintering is further regulated, and the organic molecular liquid that can instantaneously vaporize under the high temperature of the sintering is introduced to the sintering process, such that the graphitization degree of the carbon coating layer can be further regulated, thereby increasing the content of the sp² hybridized carbon in the cathode material.

### Embodiment 1

### 1. Preparation of phosphate-based cathode material

At S1, Fe_{0.97}PO₄, Li₂CO₃, and glucose and polyethylene glycol at a mass ratio of 7:2 are mixed, TiO₂ and MgCO₃ are added, and deionized water is added to obtain a pre-mixed slurry with a solid content of 40wt%.

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 750°C for 10h. The heating rate during sintering is controlled at 5°C/min, and ethanol is pumped into the sintering environment at a pumping rate of 10mL/min during sintering. A product obtained is subjected to jet milling to obtain the phosphate-based cathode material. The chemical formula of the finally prepared phosphate-based cathode material is Li_{1.03}Fe_{0.97}PO₄/C.

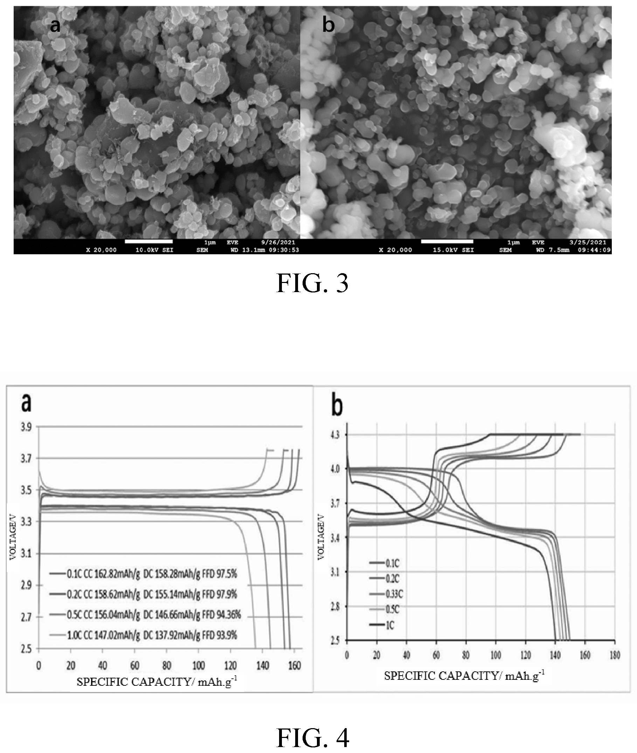

The SEM image of the phosphate-based cathode material prepared in this embodiment is illustrated in FIG. 3(a).

### 2. Preparation of cathode

A cathode slurry is prepared according to the following method. The above phosphate-based cathode material, a conductive agent acetylene black, and a binder polyvinylidene difluoride (PVDF) at a mass ratio of 97.9 : 0.9 : 1.2 are added into a vacuum mixer for mixing. A solvent n-methylpyrrolidone (NMP) is then added to a mixed slurry, and the mixed slurry is stirred by the vacuum mixer until uniform, thereby obtaining the cathode slurry of this embodiment. The above cathode slurry is coated uniformly onto both surfaces of an aluminum foil of a cathode current collector. After air drying at room temperature, it is then transferred to an oven for further drying. After drying in the oven, a semi-finished cathode is obtained. Cold pressing and cutting are performed on the semi-finished cathode to obtain a cathode ready for assembly.

### 3. Coin cell assembly

A commercially available polyethylene film is used as a separator for the lithium battery, a commercially available electrolyte suitable for batteries with 4.2V (charging upper limit) voltage system is used as the electrolyte, and a commercially available lithium sheet is used as an anode. The cathode, the anode, and the separator are assembled together, and electrolyte-injection and sealing are performed to obtain a coin cell.

The charge-discharge curve testing graph of the coin cell prepared in this embodiment is illustrated in FIG. 4(a).

### Embodiment 2

### 1. Preparation of phosphate-based cathode material

At S1, Mn_{0.6}Fe_{0.37}PO₄, Li₂CO₃, and glucose and polyethylene glycol at a mass ratio of 7:2 are mixed, V₂O₅ is added, and deionized water is added to obtain a pre-mixed slurry with a solid content of 40wt%.

At S2, sand milling is performed to grind the pre-mixed slurry to obtain the ground slurry, where grinding beads (zirconia) with a particle size in a range of 0.2mm to 0.5mm are used for sand milling for 20h. The above ground slurry is subjected to spray drying at 300°C to obtain a solid product. The above solid product is subjected to sintering at 650°C for 20h. The heating rate during sintering is controlled at 2°C/min, and methanol is pumped into the sintering environment at a pumping rate of 100mL/min during sintering. A product obtained is subjected to mechanical pulverization to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 1.

### Embodiment 3

### 1. Preparation of phosphate-based cathode material

At S1, FePO₄ and MnCO₃ (Fe/Mn molar ratio being 3.7 : 6), H₄H₂PO₄, and glucose and polyethylene glycol at a mass ratio of 7:2 are mixed, MgCO₃ is added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 8h. The above ground slurry is subjected to spray drying at 150°C to obtain a solid product. The above solid product is subjected to sintering at 850°C for 5h. The heating rate during sintering is controlled at 15°C/min, and acetone is pumped into the sintering environment at a pumping rate of 80mL/min during sintering. A product obtained is subjected to jet milling to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 1.

### Embodiment 4

### 1. Preparation of phosphate-based cathode material

At S1, FePO₄ and MnCO₃ (Fe/Mn molar ratio being 3.7 : 6), H₄H₂PO₄, and glucose and polyethylene glycol at a mass ratio of 7:2 are mixed, Cr₂O₃ and ZrO₂ are added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 750°C for 12h. The heating rate during sintering is controlled at 10°C/min, and ethanol is pumped into the sintering environment at a pumping rate of 50mL/min during sintering. A product obtained is subjected to jet milling to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 1. The X-ray diffraction (XRD) diagram of the phosphate-based cathode material prepared in this embodiment is illustrated in FIG. 2. The SEM image of the phosphate-based cathode material prepared in this embodiment is illustrated in FIG. 3(b). The charge-discharge curve testing graph of the coin cell prepared in this embodiment is illustrated in FIG.4(b).

### Embodiment 5

This embodiment differs from embodiment 4 in the preparation of the phosphate-based cathode material.

### 1. Preparation of phosphate-based cathode material

At S1, Fe₂O₃ and MnCO₃ (Fe/Mn molar ratio being 3.7 : 6), H₄H₂PO₄, and glucose and polyethylene glycol at a mass ratio of 7:2 are mixed, CoO and MgO are added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 700°C for 12h. The heating rate during sintering is controlled at 10°C/min, and ethanol is pumped into the sintering environment at a pumping rate of 30mL/min during sintering. A product obtained is subjected to jet milling to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 4.

### Embodiment 6

This embodiment differs from embodiment 4 in the preparation of the phosphate-based cathode material.

### 1. Preparation of phosphate-based cathode material

At S1, Fe₂O₃ and Mn₃O₄ (Fe/Mn molar ratio being 3.7 : 6), H₄H₂PO₄, and glucose and polyethylene glycol at a mass ratio of 7:2 are mixed, NiO and ZrO₂ are added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 700°C for 12h. The heating rate during sintering is controlled at 5°C/min, and ethanol is pumped into the sintering environment at a pumping rate of 60mL/min during sintering. A product obtained is subjected to mechanical pulverization to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 4.

### Embodiment 7

This embodiment differs from embodiment 4 in the preparation of the phosphate-based cathode material;

### 1. Preparation of phosphate-based cathode material

At S1, FeC₂O₄ and MnCO₃ (Fe/Mn molar ratio being 3.7 : 6), H₄H₂PO₄, and glucose and polyethylene glycol at a mass ratio of 7:2 are mixed, TiO₂ and MgO are added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 750°C for 12h. The heating rate during sintering is controlled at 10°C/min, and ethanol is pumped into the sintering environment at a pumping rate of 80mL/min during sintering. A product obtained is subjected to jet milling to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 4.

### Embodiment 8

This embodiment differs from embodiment 4 in the preparation of the phosphate-based cathode material;

### 1. Preparation of phosphate-based cathode material

At S1, FeC₂O₄ and Mn₃O₄ (Fe/Mn molar ratio being 3.7 : 6), H₄H₂PO₄, and glucose and polyethylene glycol at a mass ratio of 7:2 are mixed, TiO₂ and ZrO₂ are added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 700°C for 12h. The heating rate during sintering is controlled at 5°C/min, and ethanol is pumped into the sintering environment at a pumping rate of 30mL/min during sintering. A product obtained is subjected to mechanical pulverization to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 4.

### Embodiment 9

This embodiment differs from embodiment 4 in that the content of carbon in the phosphate-based cathode material is 0.2wt%, and the remaining operations and parameter settings are consistent with embodiment 4.

### Embodiment 10

This embodiment differs from embodiment 4 in that the content of the doped first metal element in the phosphate-based cathode material is 10000ppm, and the remaining operations and parameter settings are consistent with embodiment 4.

### Embodiment 11

This embodiment differs from embodiment 4 in that the content of the doped first metal element in the phosphate-based cathode material is 7000ppm, and the remaining operations and parameter settings are consistent with embodiment 4.

### Comparative embodiment 1

This comparative embodiment differs from embodiment 4 in that the phosphate-based cathode material in this comparative embodiment is not subjected to M-site doping and Li-site doping, and the remaining operations and parameter settings are consistent with embodiment 4.

### Comparative embodiment 2

This comparative embodiment differs from embodiment 4 in that the carbon material used in this comparative embodiment has a degree of disorder of 1.5.

### 1. Preparation of phosphate-based cathode material

At S1, FeC₂O₄ and Mn₃O₄ (Fe/Mn molar ratio being 3.7 : 6), H₄H₂PO₄, and glucose and polyethylene glycol at a mass ratio of 7:2 are mixed, TiO₂ and ZrO₂ are added, and deionized water is added to obtain a pre-mixed slurry with a solid content of 40wt%,

At S2, sand milling is performed to grind the pre-mixed slurry to obtain the ground slurry, where grinding beads (zirconia) with a particle size in a range of 0.2mm to 0.5mm are used for sand milling for 12h. The above ground slurry is subjected to spray drying at 200°C to obtain a solid product. The above solid product is subjected to sintering at 700°C for 12h. The heating rate during sintering is controlled at 20°C/min. A product obtained is subjected to mechanical pulverization to obtain the phosphate-based cathode material. The chemical formula of the finally prepared phosphate-based cathode material is Li_{1.03}Mn_{0.60}Fe_{0.37}PO₄/C.

The remaining operations and parameter settings are consistent with embodiment 4.

### Test methods

### I. I_{D}/I_{G} test

Raman spectroscopy test is performed on the phosphate-based cathode materials prepared in the above embodiments and comparative embodiments. The specific testing operations are as follows. The I_{D}/I_{G} of the carbon material is calculated by measuring the peak intensity (I_{G}) of the G band (approximately 1580cm⁻¹) and the peak intensity (I_{D}) of the D band (approximately 1350cm⁻¹). The measurement equipment/conditions are as follows. (1) Raman spectrometer: inVia, Renishaw plc (UK); (2) Argon ion laser wavelength: 532nm; (3) Exposure time: 10 seconds, number of integrations: 10 times.

### II. Carbon content test

A carbon content test is performed on the phosphate-based cathode materials prepared in the above embodiments and comparative embodiments. Specifically, a high-frequency infrared carbon-sulfur analyzer HW2000 is used for the test.

### III. Metal element doping content test

A carbon content test is performed on the phosphate-based cathode materials prepared in the above embodiments and comparative embodiments. The specific testing method may be referred to GB/T 30902-2014 "Inorganic chemicals for industrial use The determination of impurity element Inductively coupled plasma optical emission spectrometry(ICP-OES)". During the testing, an ICP-OES device is used to test the content of the first metal element doped on the M site and the content of the second metal element doped on the Li site.

### IV. Ion dissolution rate test

A Mn/Fe ion dissolution rate test is performed on the phosphate-based cathode materials prepared in the above embodiments and comparative embodiments. The specific testing method is as follows. (1) 5g of phosphate-based cathode material powder is weighed and poured into a beaker, and 50ml of ultrapure water is added. (2) The beaker mouth is sealed with plastic wrap and is placed at room temperature for 70h of standing. (3) The supernatant of the material obtained after standing is poured at a constant speed into three layers of medium-speed filter paper, and the filtrate is collected. (4) Suction filtration is performed on the collected filtrate using a three-layer filter membrane (pore size 0.22µm), 1ml of the filtrate is taken into a 50/100ml volumetric flask for constant volume, and then an ICP is used to test the Mn/Fe content. (5) The Mn/Fe content in the solution is converted to the dissolution rate per 5g of phosphate-based cathode material powder.

### V. Powder compacted density test

A compacted density testing is performed on the phosphate-based cathode materials prepared in the above embodiments and comparative embodiments. The specific testing equipment used is a UTM7305 powder compacted density tester manufactured by SUNS, Shenzhen, and the test is performed under the test condition of 30kN pressure.

### VI. Randomized controlled trial (Rct) Test

An electrochemical impedance spectroscopy (EIS) test is performed on the coin cells prepared in the above embodiments and comparative embodiments using an electrochemical workstation. The measured EIS data is fitted to obtain Rct data. The specific testing equipment is a VMP3 multi-channel electrochemical workstation manufactured by Bio-Logic, France.

**Table 1**

| No. | Carbon content/wt% | Doping content/ppm | | Fe/Mn dissolution rate/ppm | I_{D}/I_{G} | Compacted density/g.cm⁻³ | 100%SOC Rct/Ω |
|---|---|---|---|---|---|---|---|
| | | M site | Li site | | | | |
| Embodiment 1 | 1.2 | 4000 | 1500 | 1100 | 0.87 | 2.47 | 4.5 |
| Embodiment 2 | 1.1 | 3000 | -- | 900 | 0.90 | 2.23 | 4.9 |
| Embodiment 3 | 1.9 | -- | 2000 | 1050 | 0.93 | 2.25 | 5.2 |
| Embodiment 4 | 1.4 | 3000 | 2000 | 890 | 0.89 | 2.22 | 3.9 |
| Embodiment 5 | 1.4 | 2800 | 1200 | 970 | 0.91 | 2.19 | 4.6 |
| Embodiment 6 | 1.4 | 3200 | 1000 | 680 | 0.88 | 2.18 | 4.4 |
| Embodiment 7 | 1.4 | 2500 | 1200 | 710 | 0.92 | 2.20 | 5.1 |
| Embodiment 8 | 1.4 | 3000 | 1000 | 960 | 0.89 | 2.17 | 4.7 |
| Embodiment 9 | 0.2 | 3000 | 2000 | 1230 | 0.89 | -- | 6.1 |
| Embodiment 10 | 1.4 | 10000 | 2000 | 1050 | 0.89 | -- | 6.7 |
| Embodiment 11 | 1.4 | 3000 | 7000 | 1150 | 0.89 | -- | 6.3 |
| Comparative Embodiment 1 | 1.4 | 0 | 0 | 1255 | 0.89 | -- | 9.8 |
| Comparative embodiment 2 | 1.4 | 3000 | 2000 | 1235 | 1.5 | -- | 9.5 |

Combining embodiments 1 to 4, comparative embodiments 1 to 2, and table 1, it can be seen that by doping the first metal element on the M site and/or the second metal element on the Li site, and controlling the degree of order of the carbon material in the carbon coating layer, the Fe/Mn dissolution rate of the phosphate-based cathode material can be significantly reduced, thereby helping to improve the cycle performance of the cathode material. Moreover, the charge transfer impedance of the phosphate-based cathode material is small, resulting in excellent rate performance of the cathode material.

Combining embodiments 1 to 8 and table 1, it can be seen that by preparing the phosphate-based cathode material without a strict stoichiometric ratio using the method of the disclosure, the phosphate-based cathode material has low charge transfer impedance and low Fe/Mn dissolution rate, possessing excellent rate performance and low-temperature cycle performance. Moreover, the phosphate-based cathode material also has a wide range of powder compacted density, satisfying application requirements for different lithium battery.

Combining embodiment 4, embodiment 9, and table 1, it can be seen that when the content of carbon in the phosphate-based cathode material is low, the Fe/Mn dissolution rate and the charge transfer impedance of the cathode material increase to some extent. This is because the carbon coating layer cannot construct an effective coated conductive network structure on the surface of the phosphate-based cathode active material. However, in embodiment 4 of the disclosure, the carbon material in the carbon coating layer of the phosphate-based cathode material has a low degree of disorder and a high graphitization degree, enabling the formation of an efficient conductive network structure, thereby significantly reducing the charge transfer impedance of the phosphate-based cathode material.

Combining embodiment 4, embodiments 10 and 11, and table 1, it can be seen that when the content of the doped first metal element or the content of the doped second metal element is too high, impurity phases will be generated in the phosphate-based cathode material, thereby reducing the stability of the crystal structure. The Fe/Mn dissolution rate and the charge transfer impedance of the phosphate-based cathode material increase to some extent. However, in embodiment 4, since the content of the doped first metal element and the content of the doped second metal element are controlled within a reasonable range, the generation of impurity phases is reduced, the promoting effect of defects in the carbon coating layer on the side reactions of the phosphate-based cathode material in the electrolyte may also be inhibited. This also helps to reduce the degradation degree of the carbon coating layer caused by side reactions, thereby further stabilizing the structural stability of the phosphate-based cathode material, reducing Fe/Mn dissolution rate, and helping to improve the cycle performance of the lithium battery.

The foregoing embodiments are merely intended for describing the technical solutions of the disclosure but not intended as a limitation on the protection scope of the disclosure. Although the disclosure is described in detail with reference to preferred embodiments, those of ordinary skill in the art understand that modifications or equivalent replacements may be made to the technical solutions of the disclosure without departing from the essence and scope of the technical solutions of the disclosure.

## Claims

1. A phosphate-based cathode material, comprising a matrix particle and a carbon coating layer coated on a surface of the matrix particle; a chemical formula of the matrix particle is LiₓM_{y}PO₄, wherein 0.96 ≤ x ≤ 1.08, 0.96 ≤ y ≤ 1, and M comprises at least one of Fe or Mn;
wherein a first metal element is doped on an M site, and the first metal element comprises at least one of Ti, V, Cr, Co, Ni, Nb, Mo, or W; and/or, a second metal element is doped on a Li site, and the second metal element comprises at least one of Mg or Zr; and
the carbon coating layer comprises a carbon material, and a degree of disorder I_{D}/I_{G} of the carbon material is less than or equal to 1.2.

2. The phosphate-based cathode material of claim 1, wherein a content of carbon in the phosphate-based cathode material is in a range of 1wt% to 2wt%.

3. The phosphate-based cathode material of claim 1, wherein a content of doped first metal element is less than or equal to 5000ppm.

4. The phosphate-based cathode material of claim 1, wherein a content of doped second metal element is less than or equal to 3000ppm.

5. The phosphate-based cathode material of claim 1, wherein a particle size *D50* of the phosphate-based cathode material is in a range of 50nm to 2000nm.

6. The phosphate-based cathode material of any one of claims 1 to 5, wherein a compacted density of the phosphate-based cathode material is in a range of 2g/cm³ to 2.7g/cm³.

7. A method for preparing the phosphate-based cathode material of any one of claims 1 to 6, comprising:
at S1, mixing an iron source, a manganese source, a lithium source, and a carbon source, adding water, and grinding to obtain a pre-mixed slurry; and
at S2, spray-drying, sintering, and pulverizing the pre-mixed slurry to obtain the phosphate-based cathode material.

8. The method of claim 7, wherein the iron source comprises at least one of FePO₄, Fe₂O₃, or FeC₂O₄;
the manganese source comprises at least one of MnPO₄, MnCO₃, or Mn₃O₄;
the lithium source comprises at least one of Li₂CO₃, LiOH·H₂O, LiCl, Li₂SO₄, Li₂HPO₄, LiH₂PO₄, Li₃PO₄, or LiNO₃;
a doped source comprises an M-site doped source and a Li-site doped source; the M-site doped source comprises at least one of Ti salts, oxides of Ti salts, V salts, oxides of V salts, Cr salts, oxides of Cr salts, Co salts, oxides of Co salts, Ni salts, oxides of Ni salts, Nb salts, oxides of Nb salts, Mo salts, oxides of Mo salts, W salts, or oxides of W salts; and the Li-site doped source comprises at least one of Mg salts, oxides of Mg salts, Zr salts, or oxides of Zr salts;
the carbon source comprises a polymeric carbon source and a small molecular carbon source, wherein the polymeric carbon source comprises at least one of polyethylene glycol, polyvinylpyrrolidone, graphene, or carbon nanotubes; and the small molecular carbon source comprises at least one of glucose, sucrose, or conductive carbon black.

9. The method of claim 7, wherein at S1, a solid content of the pre-mixed slurry is in a range of 20wt% to 60wt%;
at S2, sand milling is performed to grind a ground slurry, and a duration of the sand milling is in a range of 8h to 20h; a temperature for spray drying is less than or equal to 300°C; a temperature for sintering is in a range of 650°C to 850°C, a duration of sintering is in a range of 5h to 20h, and a heating rate during sintering is in a range of 2°C/min to 15°C/min.

10. A lithium-ion battery, comprising a cathode, wherein the cathode comprises an active material layer, and the active material layer comprises the phosphate-based cathode material of any one of claims 1 to 6.
